(19) **Europäisches Patentamt**
**European Patent Office**
**Office européen des brevets**

(11) **EP 1 924 473 B1**

(12) **FASCICULE DE BREVET EUROPEEN**

(45) Date de publication et mention
de la délivrance du brevet:
**23.02.2011 Bulletin 2011/08**

(51) Int Cl.:
**B60T 8/32** (2006.01)

(21) Numéro de dépôt: **06779030.3**

(22) Date de dépôt: **10.07.2006**

(86) Numéro de dépôt international:
**PCT/FR2006/050691**

(87) Numéro de publication internationale:
**WO 2007/026088 (08.03.2007 Gazette 2007/10)**

(54) **PROCEDE D'ADAPTATION DE LA DETECTION DU FREINAGE D'URGENCE A LA RECONNAISSANCE DE FREINAGES ENCHAINES**

VERFAHREN ZUR ANPASSUNG VON NOTBREMSERFASSUNG AN SEQUENTIALISIERTER BREMSERKENNUNG

METHOD FOR ADAPTING EMERGENCY BRAKING DETECTION TO SEQUENCED BRAKING RECOGNITION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **02.09.2005 FR 0508999**

(43) Date de publication de la demande:
**28.05.2008 Bulletin 2008/22**

(73) Titulaire: **RENAULT S.A.S.**
**92100 Boulogne Billancourt (FR)**

(72) Inventeurs:
• **VOURCH, Géraldine**
  **F-78180 Montigny le Bretonneux (FR)**
• **YON, François**
  **F-27600 St Aubain sur Gaillon (FR)**
• **KOBIELA, Grégory**
  **F-76250 Deville les Rouen (FR)**

(74) Mandataire: **Religieux, Vincent**
**Renault Technocentre**
**Sce 00267 - TCR GRA 2 36**
**1, avenue du Golf**
**78288 Guyancourt Cedex (FR)**

(56) Documents cités:
**EP-A- 0 895 917     EP-A- 1 081 006**
**FR-A- 2 720 356     US-B1- 6 361 126**

**EP 1 924 473 B1**

## Description

La présente invention se rapporte à un procédé et à un système de freinage assisté dans un véhicule automobile et plus particulièrement à l'adaptation de la détection du freinage d'urgence à la reconnaissance de freinages enchaînés, en d'autres termes de freinages rapprochés dans le temps.

De manière connue en soi, une installation hydraulique classique de freinage dans un véhicule comporte au moins un circuit hydraulique de freinage, classiquement deux, chacun de ces circuits de freinage étant associé à au moins un frein de roue, de manière classique à deux freins de roue.

L'alimentation de ces circuits de freinage est assurée, dans le cas d'un freinage assisté normal, par un maître-cylindre susceptible d'être actionné à l'aide de la pédale de frein par l'intermédiaire d'un amplificateur de force de freinage, généralement un servofrein à dépression. Ce dernier comporte une chambre de travail séparée par un piston mobile d'une chambre basse pression maintenue en permanence à une pression basse, en dépression par rapport à la pression atmosphérique, et dont la sollicitation par une force à la pédale permet de commander la mise à la pression atmosphérique de la chambre de travail et l'amplification correspondante de la force à la pédale par la force agissant sur le piston mobile.

Par ailleurs, afin d'éviter le blocage des roues, qui peut provoquer la perte de contrôle du véhicule, des systèmes de freinage à antiblocage de roues comme l'ABS (de l'anglais « Antilock Braking System ») ont été développés et sont maintenant très largement répandus. Ils permettent un contrôle de la pression de freinage dans le frein de roue, sous contrôle de la vitesse de rotation de chacune des roues. Il est ainsi possible d'obtenir un comportement dynamique stable du véhicule lors d'un freinage, même appuyé. Ce type de système comprend un bloc hydraulique de freinage à commande électronique comportant des vannes d'entrée et de sortie pouvant être commandées électriquement et associées aux différents freins de roue, un capteur de pression représentant la pression dans le maître-cylindre, ainsi que des pompes de refoulement, entraînées, par exemple, électriquement et associées respectivement à un circuit de freinage. Selon le comportement dynamique de la roue surveillée, la pression de freinage correspondante peut être relâchée pour éviter le blocage en évacuant du fluide hydraulique du frein de roue concerné vers la pompe de refoulement, puis réaugmentée à l'aide du fluide hydraulique à haute pression provenant de la sortie de la pompe de refoulement ou d'un accumulateur associé à cette pompe.

Les systèmes du type ABS sont souvent couplés à des systèmes de contrôle de la dynamique du véhicule par exemple du type ESP (de l'anglais « Electronic Stability Program » ou programme électronique de stabilité) ou ASR (de l'anglais « Anti Skating Regulation » ou limiteur de patinage à l'accélération). Ces systèmes sont intégrés au bloc hydraulique du dispositif ABS. Ces systèmes de contrôle de la dynamique du véhicule permettent d'assurer un comportement dynamique stable du véhicule, en agissant sur les freins de roue sans que le conducteur du véhicule n'ait pressé la pédale de frein.

Avec un tel système de freinage ESP, il est connu de mettre en oeuvre une fonction dite HBA (de l'anglais « Hydraulic Brake Assist », assistance hydraulique au freinage) selon laquelle le freinage est réalisé avec l'assistance du bloc hydraulique. Plus précisément, lorsque cette fonction HBA est mise en oeuvre, le bloc hydraulique commande de manière autonome la montée en pression du fluide hydraulique dans le bloc hydraulique afin d'optimiser le freinage en atteignant la limite de déclenchement du dispositif ABS le plus rapidement possible.

Dans le cas d'un freinage brutal (ou freinage d'urgence), c'est-à-dire quand la pédale de frein est, par exemple, soumise de la part du conducteur à une forte pression de manière très rapide, le freinage du véhicule, équipé d'un bloc hydraulique ESP avec fonction HBA, est réalisé avec l'assistance obtenue par l'intermédiaire du bloc hydraulique, après détermination d'une situation de freinage d'urgence.

Les critères de détermination classiques de ces situations de freinage d'urgence sont, par exemple, la pression dans le maître-cylindre et/ou le gradient de pression dans le maître-cylindre, qui permettent une bonne caractérisation des freinages d'urgence.

L'inconvénient d'un système de freinage hydraulique à servofrein à dépression réside dans le fait que, dans le cas de freinages d'urgence répétés rapidement, la différence de pression entre les deux chambres du servofrein n'a pas le temps de s'établir à nouveau. La pression de freinage est donc de moins en moins accrue par le servofrein et il devient de plus en plus difficile d'atteindre le seuil de déclenchement du freinage d'urgence.

Le document US 6 361 126 décrit une solution à ce problème. Le procédé de freinage d'urgence selon ce document prend en compte la différence entre la mesure de la pression dans l'une des deux chambres et la pression atmosphérique ainsi que le gradient de cette différence de pressions. Ainsi, le procédé selon le document US 6 361 126 permet d'adapter le seuil de pression à atteindre dans le maître-cylindre pour déclencher le freinage d'urgence à quatre critères (la pression dans le maître-cylindre, le gradient par rapport au temps de la pression dans le maître-cylindre, la différence entre la pression mesurée dans l'une des chambres du servofrein à dépression et le gradient de cette différence de pressions), permettant notamment de caractériser les situations de freinages d'urgence répétés et d'adapter le déclenchement du freinage d'urgence en conséquence. Cependant, ce procédé présente l'inconvénient de nécessiter l'utilisation de moyens de mesure de pression dans l'une des chambres du servofrein et de moyens pour comparer cette pression mesurée avec la pression atmosphérique, ce qui augmente le prix du dispositif. Un autre procédé de contrôle du freinage d'urgence est connu du document EP1081006 A2. FR 2720356 A1 décrit un procédé pour réduire la valeur de seuil de déclenchement d'un prochain freinage d'urgence.

Un objectif de l'invention est donc de proposer un procédé et un dispositif permettant de déterminer correctement les situations de freinage d'urgence même répétées et d'adapter le déclenchement du freinage d'urgence, sans nécessiter de moyens de mesure et/ou de comparaison supplémentaires à la mesure de la pression dans le maître-cylindre.

On atteint cet objectif au moyen d'un procédé de contrôle du freinage dans un véhicule automobile muni d'un système de freinage assisté comportant :

- un maître-cylindre hydraulique associé à un servofrein à dépression et à au moins un circuit hydraulique, adapté pour mettre en oeuvre, séparément ou simultanément, un ou plusieurs freins de roue équipant chacun une roue du véhicule,
- un bloc hydraulique à commande électronique comprenant des moyens d'alimentation en fluide hydraulique haute pression du ou desdits freins de roue,
- des moyens électroniques de mise en oeuvre d'un freinage d'urgence après détection de l'occurrence de caractéristiques opérationnelles du freinage correspondant à la pression dans le maître-cylindre et à son taux de variation dans le temps, ledit freinage d'urgence étant réalisé avec l'assistance d'un bloc hydraulique, remarquable en ce que l'on détecte la répétition rapprochée dans le temps de mise en oeuvre de freinages d'urgence et en ce qu'on adapte les conditions de mise en oeuvre d'un freinage d'urgence en cas de répétition rapprochée.

Ainsi, avec un tel système, il est possible de détecter un situation de freinages d'urgence rapprochés dans le temps qui est susceptible de réduire l'assistance au freinage délivrée par le servofrein à dépression, la différence de pression entre les deux chambres du servofrein n'ayant pas le temps de s'établir à nouveau à la suite de ces freinages d'urgence. Le procédé selon l'invention, ayant déterminé la situation de freinages enchaînés, adapte alors les conditions de mise en oeuvre du freinage d'urgence de façon à les rendre moins restrictives, les situations de freinage d'urgence n'étant déterminées qu'à partir de la pression dans le maître-cylindre et le gradient de cette pression dans le maître-cylindre.

En outre, de manière à détecter ladite répétition rapprochée dans le temps des déclenchements de freinage d'urgence, on active une base de temps après un premier freinage d'urgence pour que ladite base de temps soit active pendant une durée prédéterminée, et en ce qu'on incrémente un compteur de freinages d'urgence, tant que ladite base de temps est active, à chaque nouveau freinage d'urgence, ledit compteur étant réinitialisé si la base temps n'est plus active.

Ainsi, selon l'invention la situation de freinages d'urgence enchaînés est caractérisée, selon le procédé, en comptant le nombre de freinages d'urgence réalisés dans un intervalle de temps prédéterminé. Cette détermination est particulièrement simple à implémenter dans un calculateur et ne nécessite aucun autre matériel.

De manière préférée, les conditions de mise en oeuvre du freinage d'urgence sont rendues moins restrictives lorsque ledit compteur dépasse une valeur $N_s$ prédéterminée, la base de temps étant alors réinitialisée.

Ainsi, avantageusement, on réalise une cartographie de l'assistance au freinage que peut fournir le servofrein à dépression en fonction du nombre de freinages d'urgence réalisés durant un intervalle de temps prédéterminé. Le procédé adapte alors ces critères déclenchement du mode de freinage d'urgence au nombre de freinages d'urgence qu'il a comptabilisé, en fonction de cette cartographie de l'assistance fournie par le servofrein.

De préférence, la base de temps étant active, ledit compteur de freinage d'urgence n'est incrémenté, que si l'intervalle de temps $\Delta t$ entre deux freinages d'urgence successifs est supérieur à une valeur minimale $T_1$.

On évite ainsi, de manière avantageuse, de gêner un conducteur actionnant plusieurs fois la pédale de façon appuyée.

De manière préférée, la base de temps étant active, ledit compteur de freinage d'urgence n'est incrémenté que si l'intervalle de temps $\Delta t$ entre la mise en oeuvre deux freinages d'urgence successifs est inférieur à une valeur maximale $T_2$.

Ainsi, avantageusement, on ne compte pas les freinages qui sont réalisés alors que la différence de pression entre les deux chambres du servofrein a eu le temps de s'établir de nouveau depuis le dernier freinage d'urgence.

De préférence, la base de temps étant active, ledit compteur n'est incrémenté que si la vitesse du véhicule $V_v$ est supérieure à une valeur minimale $V_1$.

De manière préférée, la base de temps étant active, le compteur n'est incrémenté que si la vitesse du véhicule $V_v$ est inférieure à une valeur maximale $V_2$.

De préférence, lesdites caractéristiques opérationnelles du freinage sont :

$$\begin{cases} P_{MC} \geq P_{MC\_s} \\ \mathrm{grad}\, P_{MC} \geq \left[\mathrm{grad}\, P_{MC}\right]_{\_s} \end{cases}$$

où :

- $P_{MC}$ représente la pression dans le maître-cylindre,
- $P_{MC\_s}$ une valeur seuil prédéterminée de la pression dans le maître-cylindre,
- grad $P_{MC}$ représente le gradient par rapport au temps de pression dans le maître-cylindre, et
- [grad $P_{MC}$]$_{\_s}$ une valeur seuil prédéterminée du gradient de la pression dans le maître-cylindre.

Ainsi, on détermine une situation de freinage d'urgence en ne prenant en compte que des critères directement liés à la pression dans le maître-cylindre. Ainsi, pour mettre en oeuvre le procédé, un seul capteur de pression est nécessaire, celui-ci pouvant; par exemple, être placé en sortie du maître-cylindre,

L'invention se rapporte également à un système de freinage assisté mettant en oeuvre du procédé tel que décrit ci-avant dans toutes ses variantes, remarquable en ce qu'il comporte :

- un maître-cylindre hydraulique associé à un servofrein à dépression et à au moins un circuit hydraulique, adapté pour mettre en oeuvre, séparément ou simultanément, un ou plusieurs freins de roue équipant chacun une roue du véhicule, chaque frein de roue,
- un bloc hydraulique à commande électronique comprenant des moyens d'alimentation en fluide hydraulique haute pression du ou desdits freins de roue,
- des moyens électroniques de mise en oeuvre d'un freinage d'urgence après détection de l'occurrence de caractéristiques opérationnelles du freinage correspondant à la pression dans le maître-cylindre et à son taux de variation dans le temps, ledit freinage d'urgence étant réalisé avec l'assistance dudit bloc hydraulique, et
- des moyens pour détecter la répétition rapprochée dans le temps de mise en oeuvre de freinages d'urgence et pour adapter les conditions de mise en oeuvre de freinages d'urgence en cas de répétition rapprochée.

Le système comporte, de préférence, un capteur de pression délivrant un signal représentatif de la pression dans ledit maître-cylindre.

Ainsi, de manière avantageuse, les informations concernant la pression dans le maître-cylindre ainsi que le gradient par rapport au temps de ce maître-cylindre sont obtenues de manière directe.

D'autres caractéristiques et avantages de la présente invention apparaîtront de l'examen de la description qui va suivre présentée uniquement à titre d'exemple illustratif et non limitatif, en référence aux figures ci-annexées dans lesquelles :

- la figure 1 représente schématiquement un système de freinage permettant la mise en oeuvre du procédé selon l'invention ;
- la figure 2 représente un organigramme du fonctionnement du procédé selon l'invention.

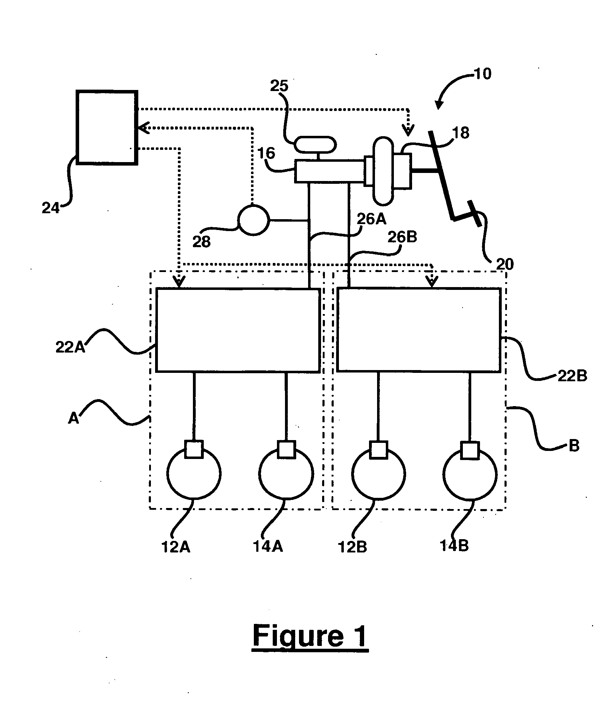

La figure 1 représente donc un système de freinage 10 de véhicule automobile permettant la mise en oeuvre du procédé selon l'invention. Sans aucun caractère limitatif pour la mise en oeuvre de l'invention, le système 10 est un système de freinage à bloc hydraulique ABS avec fonction ESP/ASR connu, un tel système de freinage étant par exemple décrit dans le brevet US 6 361 126 précité.

Dans le système de freinage 10, il est prévu un frein de roue avant gauche 12A et un frein de roue avant droite 14A combinés dans un circuit de freinage d'essieu avant A, et un frein de roue arrière gauche 12B et un frein de roue arrière droit 14B combinés dans un circuit de freinage d'essieu arrière B.

Ces freins de roue 12A, 14A, 12B, 14B sont alimentés, en freinage assisté normal, par un maître-cylindre 16 assisté par un servofrein à dépression 18 commandé par une pédale de frein 20. De plus, les deux circuits hydrauliques d'essieu avant A et arrière B sont identiques et prévoient l'interposition entre le maître-cylindre 16 et les freins de roues 12A, 14A, 12B, 14B d'un bloc hydraulique 22A, 22B à commande électronique 24 adaptés pour réaliser les fonctions ABS, ASR et/ou ESP. Sans sortir du cadre de l'invention, on utilise en général la dépression du collecteur moteur ou une dépression engendrée par une pompe à air (en particulier dans le cas des moteurs Diesel).

On décrira par la suite plus en détails un exemple de circuit hydraulique d'essieu avant A permettant de réaliser les fonctions ABS, ASR et/ou ESP, le circuit hydraulique d'essieu arrière B étant sensiblement identique au circuit hydraulique d'essieu avant A. Cependant, d'autres configurations de circuit hydraulique d'essieu sont envisageables sans sortir du cadre de l'invention.

Dans le cas d'un freinage normal, l'alimentation du circuit hydraulique d'essieu avant A en fluide hydraulique sous pression est assurée par un maître-cylindre 16, actionné au moyen d'une pédale de frein 20 via un servofrein 18, le maître-cylindre 16 et le servofrein 18 étant de types et de fonctionnements connus. Le maître-cylindre 16 est, par ailleurs, relié de manière classique, à un réservoir de fluide hydraulique 25. Ce même maître-cylindre 16 comporte deux sorties hydrauliques 26A, 26B alimentant respectivement le circuit hydraulique d'essieu avant A et arrière B. Un capteur de pression 28 est relié à la sortie hydraulique 26A et permet de mesurer une pression représentative de la pression $P_{MC}$ dans le maître-cylindre, la pression au niveau des deux sorties hydrauliques 26A, 26B du maître-cylindre 16 étant admise comme égale.

Dans la présente demande, le terme de « vanne » est employé à la place du terme « électrovanne » pour simplifier la lecture de la demande, étant entendu que toutes les « vannes » du système 10 sont des électrovannes commandées par des signaux de sortie émis par l'unité électronique de commande 24.

On décrira par la suite un exemple illustratif et non limitatif de bloc hydraulique avant 22A apte à mettre en oeuvre le procédé selon l'invention.

Afin de réguler la pression de freinage et, ainsi, de réaliser le système ABS, le bloc hydraulique avant 22A comprend deux vannes d'entrée ainsi que deux vannes de sortie, ces vannes d'entrée et de sortie pouvant être commandées électriquement et étant associées chacune à l'un des freins de roue 12A, 14A. Le bloc hydraulique 22A comprend également un conduit de retour permettant de diminuer la pression de freinage des freins de roue 12A, 14A en évacuant du fluide hydraulique depuis les freins de roue 12A, 14A jusqu'à un accumulateur basse pression, voire jusqu'au conduit de freinage principal. Un clapet anti-retour est disposé sur le conduit de retour entre une pompe de refoulement et l'accumulateur basse pression. La pompe de refoulement alimente en fluide haute pression les freins 12A, 14A, 12B, 14B lors des phases de réaugmentation de la pression de freinage.

Le système ABS est commandé par l'unité électronique de commande 24 à laquelle sont reliés des capteurs de vitesses de rotation de roues (non représentés).

Enfin, le bloc hydraulique d'essieu avant 22A comprend, de plus, une vanne de limitation de pression, qui, en position fermée, bloque la circulation directe du fluide hydraulique depuis le maître-cylindre 16 vers le conduit de freinage principal, et une vanne de précharge, reliant, en position « passante », la sortie hydraulique 26A du maître-cylindre à l'entrée basse pression de la pompe de refoulement. Ces deux vannes sont également commandées par l'unité électronique de commande 24, qui commande la fermeture de ces deux vannes pendant le mode de freinage d'urgence.

Le système de freinage assisté 10 permet la mise en oeuvre d'un freinage assisté normal qui, au moyen de l'ABS, peut être optimisé. Le principe de fonctionnement du système de freinage 10 en mode de freinage assisté normal n'est pas spécifique au système et est connu en soi. C'est pourquoi ce mode de freinage normal n'est pas décrit plus en détails par la suite.

Le mode de freinage, dit de freinage d'urgence, peut être mis en oeuvre par le système de freinage 10 tel que représenté figure 1. Ce mode de freinage d'urgence est également mis en oeuvre au moyen de l'unité électronique de commande 24, en réponse à des critères de déclenchement qui seront explicités par la suite. Ces critères étant satisfaits, l'unité électronique de commande 24 commande alors la commutation des vannes de limitation de pression dans leur position bloquante et des vannes de précharge des pompes de refoulement dans leur position passante. En outre, les pompes de refoulement sont enclenchées. Les pompes de refoulement jouent alors le rôle de source de fluide hydraulique à haute pression pour les circuits hydrauliques d'essieu avant A et arrière B. L'ABS étant mis en oeuvre, on optimise également la distance de freinage du véhicule.

Afin de déclencher ce mode de freinage d'urgence, on utilise, selon l'invention, un procédé qui présente l'avantage de s'adapter aux situations de freinages d'urgence répétés.

Selon ce procédé, la situation de freinage d'urgence est déterminée à partir de seuil de pression élevée dans le maître-cylindre 16 et d'un gradient, par rapport au temps, important de la pression dans le maître-cylindre 16.

Ainsi, en pratique, pour déterminer une situation de freinage d'urgence, on commence par mesurer la pression $P_{MC}$ en sortie du maître-cylindre 16 au moyen d'un capteur de pression 28, et on relie ce capteur à l'unité électronique de contrôle 24 afin que celle-ci puisse calculer le gradient de pression $grad(P_{MC})$ dans le maître cylindre 16.

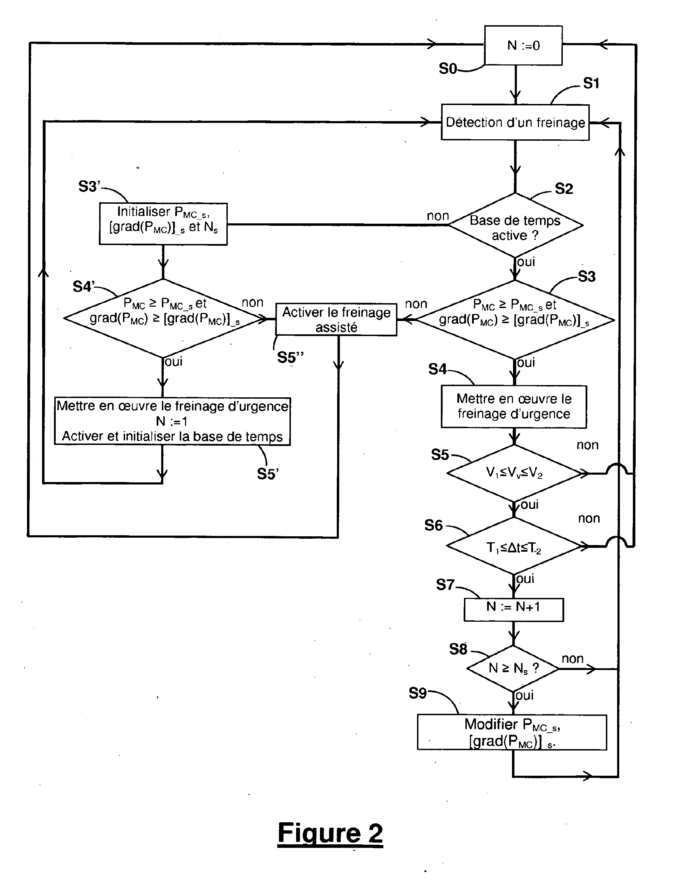

Le procédé de contrôle de freinage, représenté sous forme d'organigramme à la figure 2, est alors mis en oeuvre.

L'étape initiale du procédé S0 consisté à initialiser un compteur N de freinages d'urgence à la valeur 0.

Ensuite, dès la détection d'un freinage, en S1, l'unité électronique de commande 24 vérifie, à la seconde étape S2 du procédé, qu'une base de temps est active.

Cette base de temps joue le rôle d'un chronomètre, permettant ainsi de mesurer des intervalles de temps. Ainsi, l'initialisation de la base temps correspond à une mise à zéro du chronomètre et l'activation de la base de temps au déclenchement du chronomètre. Après un temps prédéterminé $T_B$, la base de temps est désactivée, ce qui correspond à l'arrêt du chronomètre.

Si la base de temps n'est pas active, cela signifie que le freinage détecté n'a pas été précédé par un freinage d'urgence, du moins pas depuis un temps assez long (supérieur à $T_B$) pour permettre à la différence de pression d'être de nouveau bien établie entre les deux chambres du servofrein. Dans ce cas, le procédé selon l'invention, à l'étape S3', initialise les valeurs suivantes :

- $P_{MC\_s}$ qui représente une valeur seuil de la pression du maître cylindre, prédéterminée,
- $[grad(P_{Mc})]\_s$ qui représente une valeur seuil du gradient, par rapport au temps, de la pression dans le maître-cylindre et
- $N_s$ qui représente un nombre seuil de freinage d'urgence pouvant être déclenchés dans un intervalle de temps prédéterminé.

Puis, à l'étape S4', on vérifie que les conditions caractéristiques du freinage d'urgence sont satisfaites, c'est-à-dire que :

$$\begin{cases} P_{MC} \geq P_{MC\_s} \text{ et} \\ grad(P_{MC}) \geq [grad(P_{MC})]\_s \end{cases} \qquad (C1)$$

Si la double condition C1 n'est pas remplie, on commande la mise en oeuvre du freinage assisté classique, à l'étape S5", et on repart au départ du procédé, à l'étape S0.

Par contre, si la condition C1 est remplie, on commande, à l'étape S5' du procédé selon l'invention, la mise en oeuvre du freinage d'urgence, on incrémente le compteur N de freinages d'urgence à la valeur 1 (N := 1). De plus, la base de temps est activée de manière à rester active durant le temps prédéterminé $T_B$, et initialisée. On retourne alors à l'étape S1 du procédé, en attente d'un prochain freinage.

Si celui-ci se produit de manière assez rapprochée du premier freinage d'urgence pour que la base de temps soit encore active, on va exécuter l'étape S3 du procédé selon l'invention consistant à vérifier que la double condition C1 caractéristique du freinage d'urgence est remplie. Si ce n'est pas le cas, on commande, à l'étape S5", la mise en ouvre du freinage assisté normal. Si, par contre, la double condition C1 est remplie, on commande, à l'étape S4, la mise en oeuvre du freinage d'urgence.

L'étape S5 suivante du procédé consiste à comparer la vitesse du véhicule $V_v$ à une valeur minimale $V_1$ et à une valeur maximale $V_2$ afin de vérifier que la condition :

$$V_1 \leq V_v \leq V_2 \qquad (C2)$$

est réalisée. Il est ainsi possible de sortir du procédé si la condition C2 n'est pas vérifiée et de retourner au départ du procédé, en S0: En l'espèce et de façon non limitative, on peut choisir $V_1$ de l'ordre de 80 km/h et $V_2$ de l'ordre de 120 km/h

Si la condition C2 est réalisée, le procédé, à l'étape S6, consiste à comparer l'intervalle de temps écoulé $\Delta t$ entre les deux derniers freinages (on est sûr qu'il y a un freinage précédant mémorisé puisque la temporisation est active) avec une valeur minimale $T_1$ et une valeur maximale $T_2$, telles que $T_1 < T_2$ afin de vérifier que la condition

$$T_1 \leq \Delta t \leq T_2 \qquad (C3)$$

est bien réalisée.

Si l'intervalle de temps $\Delta t$ est trop court, le freinage d'urgence n'est pas comptabilisé comme un nouveau freinage d'urgence. Si, au contraire, cet intervalle de temps est trop grand, la différence de pression entre les deux chambres du servofrein 20 a eu le temps de s'établir à nouveau après le précédent freinage d'urgence. Dans les deux cas, on repart alors au point de départ du procédé, à l'étape S0.

En l'espèce et de façon non limitative, on peut choisir un temps $T_1$ de l'ordre de la dizaine de secondes et un temps $T_2$ de l'ordre de la minute, ce temps $T_2$ étant en tout état de cause inférieur à $T_B$.

Si la condition C3 est remplie, le compteur N est incrémenté d'un à l'étape S7. A l'étape suivante S8 du procédé, la valeur N du compteur est comparée à la valeur seuil $N_s$, qui représente un nombre seuil de freinage d'urgence pouvant être déclenchés dans un intervalle de temps prédéterminé.

Si $N \leq Ns$, on repart à l'étape S1 du procédé en attente de la détection d'un nouveau freinage.

Si, par contre, $N \geq Ns$, cela signifie qu'un nombre important de freinages d'urgence a été réalisé en un temps inférieur à $T_B$, tel que la différence de pression entre les deux chambres du servofrein, qui permet d'accroître la pression dans le maître-cylindre, est réduite. Il est alors difficile d'atteindre les seuils de déclenchements du freinage d'urgence. A l'étape S9 du procédé, on abaisse alors les valeurs mémorisées des seuils $P_{MC\_s}$ et $[grad(P_{MC})]\_s$ afin de rendre la double condition C1 moins restrictive et, ainsi, qu'il soit plus aisé de déclencher le freinage d'urgence. Cette baisse des valeurs seuils sera bien entendu adaptée pour ne pas rendre le freinage d'urgence trop sensible et sera fonction du véhicule sur lequel le procédé selon l'invention sera utilisé.

On retourne alors à l'étape S1 du procédé, en attente d'un prochain freinage.

Si aucun freinage n'intervient dans le délai $T_B$, la base de temps est désactivée, c'est-à-dire qu'elle est arrêtée.

Par ailleurs, si on commande un freinage avec des paramètres $P_{MC}$ et $grad(P_{MC})$ inférieurs aux nouvelles conditions, on sort du procédé, c'est-à-dire qu'on repart au début du procédé en S0.

Bien entendu, la présente invention n'est pas limitée au cas présent, fourni à titre d'exemple illustratif et non limitatif. En outre, le bloc hydraulique mis en oeuvre par le procédé selon l'invention peut varier de manière sensible, le procédé pouvant s'appliquer avec tout bloc hydraulique de freinage d'un véhicule automobile qui permet la mise en oeuvre d'un mode de freinage d'urgence réalisé soit de manière préchargée par le maître-cylindre, comme décrit dans le présent exemple de mode de réalisation, soit de manière autonome.

## Revendications

1.    Procédé de contrôle du freinage dans un véhicule automobile muni d'un système de freinage assisté (10) comportant :

   - un maître-cylindre hydraulique (16) associé à un servofrein à dépression (18) et à au moins un circuit hydraulique (A, B), adapté pour mettre en oeuvre, séparément ou simultanément, un ou plusieurs freins de roue (12A, 14A, 12B, 14B) équipant chacun une roue du véhicule,
   - un bloc hydraulique (22A, 22B) à commande électronique (24) comprenant des moyens d'alimentation en fluide hydraulique haute pression du ou desdits freins de roue (12A, 14A, 12B, 14B),
   - des moyens électroniques (24) de mise en oeuvre d'un freinage d'urgence après détection de l'occurrence de caractéristiques opérationnelles du freinage correspondant à la pression dans le maître-cylindre et à son taux de variation dans le temps, ledit freinage d'urgence étant réalisé avec l'assistance d'un bloc hydraulique (22A, 22B),

   **caractérisé en ce que** l'on détecte la répétition rapprochée dans le temps de mise en oeuvre de freinages d'urgence, **en ce qu'**on adapte les conditions de mise en oeuvre d'un freinage d'urgence en cas de répétition rapprochée, **en ce que**, de manière à détecter ladite répétition rapprochée dans le temps des déclenchements de freinage d'urgence, on active une base de temps après un premier freinage d'urgence pour que ladite base de temps soit active pendant une durée prédéterminée, et **en ce qu'**on incrémente un compteur de freinages d'urgence, tant que ladite base de temps est active, à chaque nouveau freinage d'urgence, ledit compteur étant réinitialisé si la base temps n'est plus active.

2.    Procédé selon la revendication 1, **caractérisé en ce que** les conditions de mise en oeuvre du freinage d'urgence sont rendues moins restrictives lorsque ledit compteur dépasse une valeur $N_s$ prédéterminée, la base de temps étant alors réinitialisée.

3.    Procédé selon l'une des revendications 1 ou 2, **caractérisé en ce que**, la base de temps étant active, ledit compteur de freinage d'urgence n'est incrémenté que si l'intervalle de temps $\Delta t$ entre deux freinages d'urgence successifs est supérieur à une valeur minimale $T_1$.

4.    Procédé selon l'une des revendications 1 à 3, **caractérisé en ce que**, la base de temps étant active, ledit compteur de freinage d'urgence n'est incrémenté que si l'intervalle de temps $\Delta t$ entre la mise en oeuvre deux freinages d'urgence successifs est inférieur à une valeur maximale $T_2$.

5.    Procédé selon l'une quelconque des revendications 1 à 4, **caractérisé en ce que**, la base de temps étant active, ledit compteur n'est incrémenté que si la vitesse du véhicule $V_v$ est supérieure à une valeur minimale $V_1$.

6.    Procédé selon l'une quelconque des revendications 1 à 5, **caractérisé en ce que**, la base de temps étant active, le compteur n'est incrémenté que si la vitesse du véhicule $V_v$ est inférieure à une valeur maximale $V_2$.

7.    Procédé selon l'une quelconque des revendications 1 à 6, **caractérisé en ce que** lesdites caractéristiques opérationnelles du freinage sont :

$$\begin{cases} P_{MC} \geq P_{MC\_s} \\ \mathrm{grad}\, P_{MC} \geq \left[\mathrm{grad}\, P_{MC}\right]_{\_s} \end{cases}$$

où :

- $P_{MC}$ représente la pression dans le maître-cylindre (16),
- $P_{MC\_s}$ une valeur seuil prédéterminée de la pression dans le maître-cylindre (16),
- grad $P_{MC}$ représente le gradient par rapport au temps de pression dans le maître-cylindre (16), et
- $[\mathrm{grad}\, P_{MC}]_{\_s}$ une valeur seuil prédéterminée du gradient de la pression dans le maître-cylindre (16).

8. Système de freinage assisté mettant en oeuvre le procédé selon l'une quelconque des revendications précédentes, **caractérisé en ce qu'**il comporte :

- un maître-cylindre hydraulique (16) associé à un servofrein à dépression (18) et à au moins un circuit hydraulique (A, B), adapté pour mettre en oeuvre, séparément ou simultanément, un ou plusieurs freins de roue (12A, 14A, 12B, 14B) équipant chacun une roue du véhicule, chaque frein de roue (12A, 14A, 12B, 14B),
- un bloc hydraulique (22A, 22B) à commande électronique (24) comprenant des moyens d'alimentation en fluide hydraulique haute pression du ou desdits freins de roue (12A, 14A, 12B, 14B),
- des moyens électroniques (24) de mise en oeuvre d'un freinage d'urgence après détection de l'occurrence de caractéristiques opérationnelles du freinage correspondant à la pression dans le maître-cylindre et à son taux de variation dans le temps, ledit freinage d'urgence étant réalisé avec l'assistance dudit bloc hydraulique (22A, 22B), et
- des moyens pour détecter la répétition rapprochée dans le temps de mise en oeuvre de freinages d'urgence et pour adapter les conditions de mise en oeuvre de freinages d'urgence en cas de répétition rapprochée.

9. Système selon la revendication 8, **caractérisé en ce qu'**il comporte, de plus, un capteur de pression (28) délivrant un signal représentatif de la pression dans ledit maître-cylindre (16).

**Claims**

1. Method of controlling braking in a motor vehicle provided with an assisted braking system (10) comprising:

- a hydraulic master cylinder (16) associated with a vacuum brake booster (18) and with at least one hydraulic circuit (A, B), designed to operate, separately or simultaneously, one or more wheel brakes (12A, 14A, 12B, 14B) each equipping a wheel of the vehicle,
- a hydraulic block (22A, 22B) with electronic control (24) comprising means for supplying highpressure hydraulic fluid to said wheel brake or brakes (12A, 14A, 12B, 14B),
- electronic means (24) for executing an emergency braking operation following detection of the occurrence of operational braking characteristics corresponding to the pressure in the master cylinder and to its rate of variation over time, said emergency braking operation being carried out with the assistance of a hydraulic block (22A, 22B),

**characterized in that** the temporally close repetition of executing emergency braking operations is detected and **in that** the conditions for executing an emergency braking operation are adapted in the case of close repetition, **in that**, in order to detect said temporally close repetition of emergency braking activations, a time base is activated after a first emergency braking operation so that said time base is active for a predetermined period, and **in that** an emergency braking counter is incremented, for as long as said time base is active, upon each new emergency braking operation, said counter being reinitialized if the time base is no longer active.

2. Method according to Claim 1, **characterized in that** the conditions for executing emergency braking are made less restrictive once said counter exceeds a predetermined value $N_s$, the time base then being reinitialized.

3. Method according to either of Claims 1 and 2, **characterized in that**, with the time base being active, said emergency braking counter is incremented only if the time interval $\Delta t$ between two successive emergency braking operations is greater than a minimum value $T_1$.

**4.** Method according to one of Claims 1 to 3, **characterized in that**, with the time base being active, said emergency braking counter is incremented only if the time interval Δt between the execution of two successive emergency braking operations is less than a maximum value $T_2$.

**5.** Method according to any one of Claims 1 to 4, **characterized in that**, with the time base being active, said counter is incremented only if the speed of the vehicle $V_v$ is greater than a minimum value $V_1$.

**6.** Method according to any one of Claims 1 to 5, **characterized in that**, with the time base being active, the counter is incremented only if the speed of the vehicle $V_v$ is less than a maximum value $V_2$.

**7.** Method according to any one of Claims 1 to 6, **characterized in that** said operational braking characteristics are:

$$\begin{cases} P_{MC} \geq P_{MC\_s} \\ \text{grad } P_{MC} \geq \left[\text{grad } P_{MC}\right]_{\_s} \end{cases}$$

where:

- $P_{MC}$ represents the pressure in the master cylinder (16),
- $P_{MC\_s}$ is a predetermined threshold value of the pressure in the master cylinder (16),
- grad $P_{MC}$ represents the gradient with respect to time of the pressure in the master cylinder (16), and
- [grad $P_{MC}]_{\_s}$ is a predetermined threshold value of the gradient of the pressure in the master cylinder (16).

**8.** Assisted braking system implementating the method according to any one of the preceding claims, **characterized in that** it comprises:

- a hydraulic master cylinder (16) associated with a vacuum brake booster (18) and with at least one hydraulic circuit (A, B), designed to operate, separately or simultaneously, one or more wheel brakes (12A, 14A, 12B, 14B) each equipping a wheel of the vehicle,
- a hydraulic block (22A, 22B) with electronic control (24) comprising means for supplying highpressure hydraulic fluid to said wheel brake or brakes (12A, 14A, 12B, 14B),
- electronic means (24) for executing an emergency braking operation following detection of the occurrence of operational braking characteristics corresponding to the pressure in the master cylinder and to its rate of variation over time, said emergency braking operation being carried out with the assistance of said hydraulic block (22A, 22B), and
- means for detecting the temporally close repetition of executing emergency braking operations and for adapting the conditions for executing emergency braking operations in the case of close repetition.

**9.** System according to Claim 8, **characterized in that** it additionally comprises a pressure sensor (28) delivering a signal representative of the pressure in said master cylinder (16).

**Patentansprüche**

**1.** Verfahren zur Überwachung des Bremsens in einem mit einem Bremskraftverstärkungssystem (10) ausgestatteten Kraftfahrzeug, das aufweist:

- einen hydraulischen Hauptbremszylinder (16), der einem Unterdruck-Bremskraftverstärker (13) und mindestens einem Hydraulikkreis (A, B) zugeordnet ist, geeignet, um getrennt oder gleichzeitig eine oder mehrere Radbremsen (12A, 14A, 12B, 14B) anzuwenden, die je ein Rad des Fahrzeugs bestücken,
- einen Hydraulikblock (22A, 22B) mit elektronischer Steuerung (24), der Einrichtungen zur Versorgung der Radbremse(n) (12A, 14A, 12B, 14B) mit Hochdruck-Hydraulikflüssigkeit enthält,
- elektronische Einrichtungen (24) zur Anwendung einer Notbremsung nach Erfassen des Auftretens von Funktionsmerkmalen des Bremsens, die dem Druck im Hauptbremszylinder und seiner zeitlichen Änderungsrate entsprechen, wobei die Notbremsung mit Unterstützung eines Hydraulikblocks (22A, 22B) erfolgt,

**dadurch gekennzeichnet, dass** die zeitlich angenäherte Wiederholung der Anwendung von Notbremsungen erfasst wird, dass die Anwendungsbedingungen einer Notbremsung im Fall einer angenäherten Wiederholung angepasst werden, dass, um die zeitlich angenäherte Wiederholung der Auslösungen einer Notbremsung zu erfassen, eine Zeitbasis nach einer ersten Notbremsung aktiviert wird, damit die Zeitbasis während einer vorbestimmten Dauer aktiv ist, und dass ein Notbremsungszähler, so lange die Zeitbasis aktiv ist, bei jeder neuen Notbremsung inkrementiert wird, wobei der Zähler zurückgestellt wird, wenn die Zeitbasis nicht mehr aktiv ist.

2. Verfahren nach Anspruch 1, **dadurch gekennzeichnet, dass** die Anwendungsbedingungen der Notbremsung weniger restriktiv gemacht werden, wenn der Zähler einen vorbestimmten Wert $N_s$ überschreitet, wobei die Zeitbasis dann zurückgestellt wird.

3. Verfahren nach einem der Ansprüche 1 oder 2, **dadurch gekennzeichnet, dass**, wenn die Zeitbasis aktiv ist, der Notbremsungszähler nur inkrementiert wird, wenn das Zeitintervall $\Delta t$ zwischen zwei aufeinanderfolgenden Notbremsungen über einem Mindestwert $T_1$ liegt.

4. Verfahren nach einem der Ansprüche 1 bis 3, **dadurch gekennzeichnet, dass**, wenn die Zeitbasis aktiv ist, der Notbremsungszähler nur inkrementiert wird, wenn das Zeitintervall $\Delta t$ zwischen der Anwendung von zwei aufeinanderfolgenden Notbremsungen unter einem Höchstwert $T_2$ liegt.

5. Verfahren nach einem der Ansprüche 1 bis 4, **dadurch gekennzeichnet, dass**, wenn die Zeitbasis aktiv ist, der Zähler nur inkrementiert wird, wenn die Geschwindigkeit des Fahrzeugs $V_v$ über einem Mindestwert $V_1$ liegt.

6. Verfahren nach einem der Ansprüche 1 bis 5, **dadurch gekennzeichnet, dass**, wenn die Zeitbasis aktiv ist, der Zähler nur inkrementiert wird, wenn die Geschwindigkeit des Fahrzeugs $V_v$ unter einem Höchstwert $V_2$ liegt.

7. Verfahren nach einem der Ansprüche 1 bis 6, **dadurch gekennzeichnet, dass** die Funktionsmerkmale des Bremsens sind:

$$\begin{cases} P_{MC} \geq P_{MC\_s} \\ \mathrm{grad}\, P_{MC} \geq \left[\mathrm{grad}\, P_{MC}\right]_{\_s} \end{cases}$$

wobei:

- $P_{MC}$ den Druck im Hauptbremszylinder (16) darstellt,
- $P_{MC\_s}$ ein vorbestimmter Schwellwert des Drucks im Hauptbremszylinder (16),
- grad $P_{MC}$ den zeitbezogenen Gradienten des Drucks im Hauptbremszylinder (16) darstellt, und
- [grad $P_{MC}$]$_{\_s}$ ein vorbestimmter Schwellwert des Gradienten des Drucks im Hauptbremszylinder (16) .

8. Bremskraftverstärkungssystem, das das Verfahren nach einem der vorhergehenden Ansprüche anwendet, **dadurch gekennzeichnet, dass** es aufweist:

- einen hydraulischen Hauptbremszylinder (16), der einem Unterdruck-Bremskraftverstärker (18) und mindestens einem Hydraulikkreis (A, B) zugeordnet ist, geeignet, um getrennt oder gleichzeitig eine oder mehrere Radbremsen (12A, 14A, 12B, 14B) anzuwenden, die je ein Rad des Fahrzeugs bestücken,
- einen Hydraulikblock (22A, 22B) mit elektronischer Steuerung (24), der Einrichtungen zur Versorgung der Radbremse(n) (12A, 14A, 12B, 14B) mit Hochdruck-Hydraulikflüssigkeit enthält,
- elektronische Einrichtungen (24) zur Anwendung einer Notbremsung nach Erfassung des Auftretens von Funktionsmerkmalen des Bremsens, die dem Druck im Hauptbremszylinder und seiner zeitlichen Änderungsrate entsprechen, wobei die Notbremsung mit Hilfe eines Hydraulikblocks (22A, 22B) erfolgt, und
- Einrichtungen zur Erfassung der zeitlich angenäherten Wiederholung der Anwendung von Notbremsungen und zur Anpassung der Anwendungsbedingungen von Notbremsungen im Fall einer angenäherten Wiederholung.

9. System nach Anspruch 8, **dadurch gekennzeichnet, dass** es außerdem einen Drucksensor (28) aufweist, der ein für den Druck im Hauptbremszylinder (16) repräsentatives Signal liefert.

**Figure 1**

**<u>Figure 2</u>**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6361126 B
- EP 1081006 A2
- FR 2720356 A1